# FASCICULE DE BREVET EUROPEEN

(11) **EP 2 373 501 B1**
(45) Date de publication et mention de la délivrance du brevet: **15.05.2013**
(21) Numéro de dépôt: 09795355.8
(22) Date de dépôt: 26.11.2009
(51) Int. Cl.: B60C 11/11

(54) **BANDE DE ROULEMENT DE PNEU**
REIFENLAUFFLÄCHE
TYRE TREAD

(30) Priorité: 05.12.2008 FR 0858298
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: NARITA, Nobutaka, F-63000 Clermont-Ferrand (FR); TRAN, Florence, Gunma 373-0015 (JP)
(74) Mandataire: Diernaz, Christian
(86) Numéro de dépôt international: PCT/EP2009/065919
(87) Numéro de publication internationale: WO 2010/063641

(56) Documents cités:
- WO-A-96/15002
- GB-A- 546 975
- JP-A- 7 081 318
- JP-A- 2005 262 973
- US-A- 2 909 271

## Description

Le domaine de l'invention concerne les bandes de roulement de pneus et plus particulièrement l'état de surface de la surface de roulement de telles bandes à différents niveaux d'usure.

Le roulage hivernal sur des routes recouvertes de neige et glace requiert une bande de roulement pourvue d'un grand nombre d'arêtes et de creux afin d'augmenter le coefficient de friction du pneu sur la route et de permettre une meilleure adhérence par le stockage et/ou l'évacuation des particules fluides ou solides présentes sur ces routes.

Par stockage et/ou évacuation, on entend que les particules sont dirigées hors du contact direct entre la bande de roulement et la chaussée.

Diverses solutions ont été proposées par la personne du métier pour améliorer l'adhérence d'un pneu destiné aux véhicules de tourisme pendant substantiellement toute la durée d'usage du pneu (c'est-à-dire avant d'atteindre le niveau légal d'usure maximale).

La demande de brevet GB 546975-A décrit une bande de roulement comprenant des nervures circonférentielles rendues plus souples, flexibles, compressibles et davantage ventilées dans certaines zones à l'aide de groupes de petits évidements séparés les uns des autres ou interconnectés entre eux et répartis circonférentiellement dans le caoutchouc formant la bande de roulement sans en affecter de manière appréciable la stabilité. Ces évidements peuvent avoir une forme régulière ou irrégulière, une section uniforme ou non, être ou non inclinés par rapport à la surface de la bande de roulement et avoir des profondeurs diverses.

La demande de brevet JP 2005262973-A décrit une bande de roulement comprenant des incisions ayant dans le sens de la profondeur de la bande de roulement des parties larges alternant avec des parties étroites, chacune des incisions comprenant une partie large débouchant dans la surface de contact avec la chaussée étant disposée en alternance avec une incision comprenant une partie étroite débouchant dans la surface de contact avec la chaussée pour permettre l'évacuation de l'eau en évitant une déformation (aplatissement) de la surface de l'incision.

Par incision, on entend une très fine découpure dans le caoutchouc quasiment sans enlèvement de matière.

Il a été constaté que la mise en oeuvre de tels moyens permet de réaliser le drainage de l'eau pour des pneus de tourisme qui ne sont pas destinés à rouler sur des routes enneigées ou verglacées. Toutefois, il reste à améliorer la performance de ces pneus sur des sols recouverts de particules de glace ou de neige.

L'objet de l'invention est de fournir une solution technique au problème posé d'une bonne performance en adhérence ("*grip*" en anglais) sur chaussée enneigée ou verglacée dès les premiers kilomètres de roulage d'une bande de roulement neuve et toute sa durée d'utilisation jusqu'à sensiblement son remplacement pour cause d'usure.

Dans ce but, la bande de roulement pour pneu hivernal selon l'invention est pourvue d'une pluralité de rainures délimitant des éléments de relief, ces rainures ayant une profondeur moyenne **H**. Cette bande de roulement a une surface de roulement prévue pour venir en contact avec la chaussée pendant le roulage, formée par les surfaces externes des différents éléments de relief qui peuvent être des blocs ou des nervures (blocs et nervures pouvant être combinés dans une même bande).

Cette bande de roulement comprend, sur une pluralité de ses éléments de relief, une pluralité d'évidements - ou puits - de profondeur totale **H***, chaque évidement comprenant au moins deux cavités d'un premier type de cavités, ces cavités étant disposées les unes après les autres dans une direction orientée de la surface de roulement vers l'intérieur de la bande de roulement (c'est-à-dire dans une direction radiale). Par disposées les unes après les autres, on entend ici que ces cavités sont disposées de façon à se succéder à des niveaux différents dans la direction de l'épaisseur de la bande de roulement , c'est-à-dire de façon à ce que le contour externe d'une cavité d'un premier type d'un évidement soit localisé, dans la direction de l'épaisseur de la bande, à une distance de la surface de roulement à l'état neuf qui est supérieure ou égale à la distance séparant le contour interne de la cavité précédente par rapport à la même surface de roulement.

Cette caractéristique est essentielle puisqu'elle rend active sur la surface de roulement chaque cavité d'une façon indépendante les unes des autres : dès qu'une première cavité a disparu suite à une usure partielle une nouvelle cavité apparaît et devient active sur la surface de roulement. L'état de la technique montre des variantes comprenant plusieurs incisions fermées autour d'un même axe délimitant plusieurs cavités ; mais, en aucune façon il n'était décrit ou suggéré des cavités se succédant les unes aux autres dans la direction de la profondeur. Dans le document WO 96/15002, on constate que les cavités toutes sont sensiblement actives en même temps sur la surface de roulement.

Si le nombre total de cavités d'un premier type est **N**, alors chaque cavité d'un premier type de rang **i** (**i** variant de 1 à **N**) a une profondeur **Hi** mesurée dans la direction de l'épaisseur de la bande, **Hi** étant inférieure à la profondeur **H*** de l'évidement, et est délimitée par une paroi principale. La paroi principale de chaque cavité de premier type est telle que son intersection avec une surface virtuelle parallèle à la surface de roulement à l'état neuf et passant par les points de ladite paroi les plus à l'extérieur de la bande forme un contour extérieur fermé et de longueur **Ce**. La paroi principale de chaque cavité de premier type est telle que son intersection avec une surface virtuelle parallèle à la surface de roulement à l'état neuf et passant par les points de la paroi principale les plus à l'intérieur de la bande forme un contour intérieur fermé et de longueur **Ci**. En outre, la longueur Ce du contour extérieur est supérieure à la longueur **Ci** du contour intérieur d'une même cavité.

Le nombre **N** de cavités d'un premier type situées dans le prolongement l'une de l'autre pour chaque évidement est un nombre entier allant de 2 à 8.

La bande de roulement selon l'invention comprend en outre une cavité d'un second type intercalée entre deux cavités d'un premier type, une cavité de second type étant délimitée par une paroi dont l'intersection, avec une surface parallèle à la surface de roulement à l'état neuf et passant par les points les plus à l'extérieur de cette paroi dans la bande de roulement, forme un contour fermé de longueur égale à la longueur **Ci** du contour intérieur de la cavité de premier type à laquelle cette cavité de second type est reliée. Par ailleurs cette cavité de second type est connectée à une cavité de premier type de rang **i**+1 par un contour de longueur égale à la longueur **Ce** du contour extérieur de ladite cavité de rang **i**+1.

Ces cavités d'un second type ont des profondeurs appropriées pour faciliter la transition entre deux cavités d'un premier type et notamment faciliter le moulage et le démoulage de la bande pourvue de telles cavités et supprimer ou réduire de manière importante les blessures par arrachement de gomme au moment du démoulage, notamment lorsque de la gomme relativement dure est présente dans au moins une zone de la bande de roulement. Préférentiellement, les profondeurs des cavités de second type sont inférieures aux profondeurs des cavités de premier type.

Dans une variante d'exécution de l'invention, la longueur Ci du contour intérieur fermé d'au moins la cavité d'un premier type la plus à l'intérieur de la bande (c'est-à-dire la cavité de rang égal à N) est égale à zéro ou substantiellement proche de zéro. Dans une autre variante, les longueurs de tous les contours intérieurs de toutes les cavités d'un premier type de cavité sont égales à zéro ou substantiellement proche de zéro. Dans un tel cas, chaque cavité d'un premier type peut être de forme conique, le sommet du cône se trouvant vers l'intérieur de la bande. L'angle de la génératrice du cône est préférentiellement compris entre 2 degrés et 30 degrés.

Dans une variante d'exécution préférentielle, les longueurs des contours extérieurs des parois des cavités d'un premier type de chaque évidement sont toutes égales entre elles.

Dans une variante d'exécution préférentielle, les contours intérieurs et extérieurs des cavités d'un premier type sont de forme circulaire.

Pour toutes les formes d'exécution de l'invention, la profondeur de chacune des cavités du premier type peut être égale à ou différente de celle de chacune des autres cavités du premier type.

Dans une variante d'exécution de l'invention, chaque cavité d'un premier type comprend une partie de cavité de section constante et une partie de section variable et décroissante, la partie de section constante étant placée à l'intérieur dans la bande par rapport à la partie de section variable. Par partie de section constante on entend une cavité dont l'intersection de la paroi avec toute surface virtuelle parallèle à la surface de roulement à l'état neuf est de contour constant en forme et en longueur.

Dans une variante d'exécution préférentielle, les lignes d'intersection de contour fermé des parois principales des cavités du premier type et du second type sont des lignes de contour circulaire.

Par la mise en oeuvre d'une solution conforme à l'invention, il est ainsi possible de créer, à plusieurs reprises durant la vie de la bande de roulement et au fur et à mesure de son usure, les conditions appropriées pour obtenir un contact amélioré entre le pneu et la chaussée en captant, stockant les particules de neige ou de glace présentes sur la chaussée dans le contact et en évacuant ces particules hors du contact par l'effet de la centrifugation. Ceci est obtenu sans pour autant affecter significativement la rigidité de la bande. En effet, par la succession des cavités du premier type, il est possible d'accroître les efforts de pression sur les régions en contact avec la chaussée et de créer à plusieurs reprises un volume approprié pour capter des particules présentes sur la chaussée.

Pour obtenir un effet optimal, il est préférable que la distance minimale séparant deux évidements soit inférieure ou au plus égale à 0,4 millimètre (cette distance minimale étant mesurée sur la surface de roulement à l'état neuf de la bande).

Dans une variante avantageuse, les contours extérieurs des cavités de tous les évidements débouchant sur la surface de roulement sont de géométrie appropriée pour être adjacents les uns aux autres afin de créer des lignes de contact pour d'accroître les pressions de contact le long de ces lignes et faciliter à l'état neuf la collecte des particules solides vers l'intérieur des évidements. Dans une telle variante, les surfaces de contact entre la bande et la chaussée sont réduites à ces lignes de contact.

Il est également avantageux que le diamètre des cavités du premier type soit au moins égal à 0,8 millimètre et au plus égal à 1,6 millimètre. Lorsque le diamètre est inférieur à 0,8 millimètre, il y a des difficultés à réaliser le démoulage de l'évidement sans le blesser et lorsque le diamètre est supérieur à 1,6 millimètre l'efficacité de l'évidement est significativement réduite. Le volume total des cavités des évidements de premier et second types par unité de surface sur la surface de roulement est au moins égal à 0,25 millimètres cubes et au plus égal à 20 millimètres cubes.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une partie d'une surface de roulement d'une bande de roulement selon l'invention destinée à un pneu d'usage hivernal pour véhicule de tourisme, cette bande étant pourvue d'une pluralité d'évidements débouchant sur la surface de roulement ;

La figure 2 montre une vue en coupe d'un évidement constitué, dans la direction radiale vers l'intérieur de la bande de roulement, par quatre cavités d'un premier type, chacune de ces cavités étant de forme tronconique - cet exemple faisant partie de l'état de la technique ;

La figure 3 montre une vue de la surface de roulement autour d'un évidement tel que représenté à la figure 2 ;

La figure 4 montre une vue en coupe d'un évidement formé de trois cavités d'un premier type de forme conique - cet exemple faisant partie de l'état de la technique ;

La figure 5 montre une vue en coupe d'un évidement constitué, dans la direction radiale vers l'intérieur de la bande de roulement, par quatre cavités d'un premier type, chacune de ces cavités comportant une partie de forme tronconique et une partie de forme cylindrique ;

La figure 6 montre en coupe un bloc de gomme comprenant un évidement constitué, dans la direction radiale vers l'intérieur de la bande de roulement, par une succession de cavités d'un premier type et de cavités d'un second type ;

La figure 7 montre un élément moulant pour mouler un évidement tel que représenté à la figure 6 ;

La figure 8 montre une vue de la surface de roulement d'une bande de roulement pour laquelle les contours extérieurs des évidements sont adjacents les uns aux autres afin de créer des lignes ou arêtes de contact ;

La figure 9 montre une variante de bande de roulement avec deux types d'évidements - - cet exemple faisant partie de l'état de la technique.

Pour faciliter la lecture des figures et de la description associée, les mêmes références sont employées dans les dessins pour désigner des éléments structurels ou fonctionnels identiques quelle que soit la variante considérée.

De façon générale, une bande de roulement selon l'invention comprend une pluralité d'évidements débouchant sur la surface de roulement à l'état neuf. Chaque évidement est formé d'une succession de cavités, chaque cavité ayant un rang i, ce rang allant de 1 (correspondant à la cavité débouchant sur la surface de roulement à l'état neuf) à N (correspondant à la cavité la plus à l'intérieur de la bande).

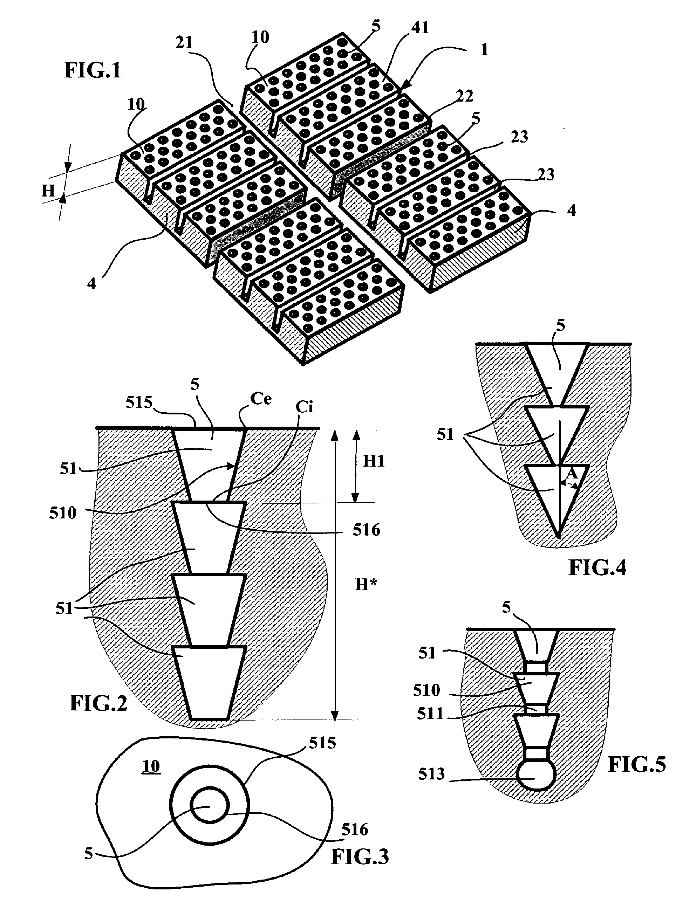

La figure 1 montre une partie d'une bande de roulement 1 selon l'invention pour un pneu hivernal destiné à équiper un véhicule de tourisme. Cette partie de bande de roulement comprend une surface de roulement 10 destinée à venir en contact avec la chaussée pendant le roulage du pneu pourvu de cette bande de roulement 1. On distingue des rainures longitudinales 21 et des rainures transversales 22 délimitant des éléments de relief 4, ayant dans le cas présent la forme de blocs. Chaque bloc 4 comprend une face de contact 41 formant une partie de la surface de roulement 10 de la bande et des faces latérales délimitant les rainures longitudinales et transversales. Ces rainures 21, 22 ont une même profondeur moyenne **H** égale dans le cas présent à 8 mm. En outre chaque bloc est pourvu d'incisions 23 orientées dans la direction transversale (parallèle à l'axe de rotation du pneu) et de profondeur inférieure à la hauteur **H** des blocs.

La figure 2 montre une coupe locale d'un élément de relief selon l'état de la technique, cette coupe étant réalisée au voisinage d'un évidement 5. Chaque évidement 5 est formé de quatre cavités 51 d'un premier type de cavités, chacune de ces cavités 51 d'un premier type étant délimitée par une paroi principale 510 et ayant une profondeur **H1** mesurée dans la direction de l'épaisseur de la bande. Toutes les cavités 51 ont une même profondeur dans le cas présent ; cette profondeur est donc égale au quart de la profondeur **H*** de l'évidement 5.

La paroi principale 510 de chaque cavité 51 de premier type est telle que son intersection avec une surface virtuelle parallèle à la surface de roulement à l'état neuf et passant par les points 515 de ladite paroi les plus à l'extérieur de la bande forme un contour extérieur circulaire et fermé et de longueur **Ce**.

La paroi principale 510 de chaque cavité 51 de premier type est telle que son intersection avec une surface virtuelle parallèle à la surface de roulement à l'état neuf et passant par les points 516 de ladite paroi principale 510 les plus à l'intérieur de la bande forme un contour intérieur fermé et de longueur **Ci**.

Cette bande de roulement est telle que les cavités 51 sont disposées à différents niveaux d'usure dans une direction orientée de la surface de roulement 10 vers l'intérieur de la bande de roulement et telle que la longueur **Ce** du contour extérieur d'une cavité est supérieure à la longueur **Ci** du contour intérieur de la même cavité 51.

Chaque cavité 51 a une forme tronconique d'axe sensiblement perpendiculaire à la face de contact du bloc dans lequel il est formé. Toutes les longueurs des contours extérieurs des parois des cavités 51 sont toutes égales.

La figure 3 montre la surface de roulement 10 au voisinage d'un évidement 5 correspondant à l'exemple de la figure 2. On distingue une arête circulaire 515 formée sur la surface de roulement, cette arête de forme circulaire ayant une longueur **Ce**. On distingue une arête circulaire 516 formée à l'intérieur de la bande de roulement et située aux points les plus à l'intérieur de la première cavité. Cette arête de forme circulaire 516 a une longueur **Ci** qui est inférieure à la longueur **Ce**.

Ainsi à l'état neuf de la bande la surface de roulement comprend un très grand nombre d'évidements 5 qui favorisent la collecte des particules présentes sur la chaussée notamment lors de roulage en conditions hivernales. La forme tronconique favorise cette collecte en augmentant la pression de contact sur l'arête en contact avec la chaussée. Par un renouvellement de la forme initiale, il est possible de retrouver des conditions sensiblement identiques aux conditions de la bande de roulement à l'état neuf. Dans le cas présent, ces conditions se retrouvent quatre fois pendant l'usage de la bande.

Pour mouler un tel évidement, il est aisé de réaliser un élément moulant ayant la géométrie complémentaire de ces évidements. La nature élastique des matériaux caoutchoutiques permet le démoulage de ces éléments moulant bien que la géométrie choisie s'opposant un peu au démoulage notamment à cause des parties angulaires 11 de matière.

Avantageusement, la distance minimale, sur la surface de roulement à l'état neuf de la bande, séparant deux évidements est inférieure ou au plus égale à 0,4 millimètre. Cette distance est mesurée comme la distance minimale entre deux contours extérieurs voisins.

La figure 4 montre une variante d'évidement 5 - variante comprise dans l'état de la technique - selon laquelle les longueurs **Ci** de tous les contours intérieurs de toutes les cavités 51 d'un premier type de cavité sont égales à zéro. Dans la pratique industrielle, on peut prévoir que ces longueurs sont substantiellement proches de zéro, afin de pouvoir plus facilement procéder à la réalisation de l'élément moulant pour mouler un tel évidement. Dans cet exemple, chaque cavité 51 d'un premier type est de forme conique, le sommet du cône se trouvant vers l'intérieur de la bande. L'angle A de la génératrice de chaque cône est égal à 20 degrés.

La figure 5 montre en coupe une variante d'évidement selon l'invention. Selon cette variante, entre chaque cavité 51 d'un premier type comprend une partie de cavité de section constante 511 et une partie de section variable et décroissante 510, la partie de section constante 511 étant placée à l'intérieur dans la bande par rapport à la partie de section variable 510. La partie la plus à l'intérieur de l'évidement est formée par une partie hémisphérique 513 de diamètre sensiblement égal au diamètre du contour d'intersection de l'évidement avec la surface de roulement à l'état neuf.

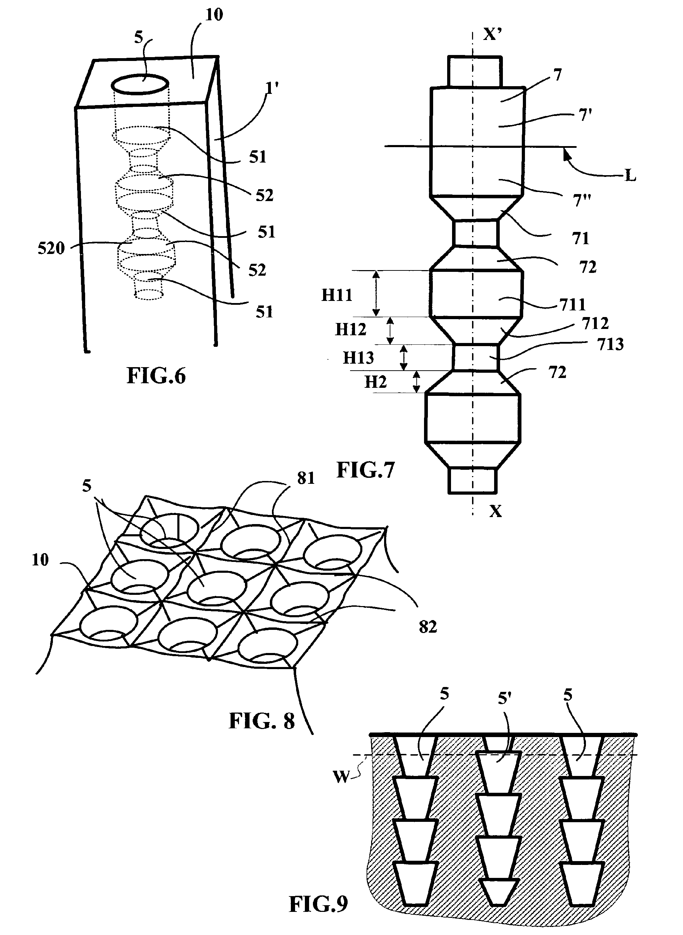

La figure 6 montre un élément de matière 1' de bande de roulement comprenant un évidement 5 comprenant plusieurs cavités 51 d'un premier type et intercalée entre deux cavités 51 d'un premier type une cavité d'un second type 52. Cette cavité d'un second type 52 est délimitée par une paroi 520 dont l'intersection, avec une surface parallèle à la surface de roulement à l'état neuf et passant par les points les plus à l'extérieur de ladite paroi, forme un contour fermé de longueur égale à la longueur **Ci** du contour intérieur de la cavité de premier type 51 à laquelle cette cavité de second type 52 est reliée et qui est située au dessus de la cavité 52, c'est-à-dire entre la cavité de second type et la surface de roulement. En outre, cette cavité de second type est connectée à une cavité de premier type qui est située au dessous d'elle (c'est-à-dire plus près du fond de l'évidement) par un contour de longueur égale à la longueur **Ce** du contour extérieur de ladite cavité de premier type située au dessous.

Préférentiellement, les profondeurs P2 des cavités de second type 52 sont très inférieures aux profondeurs P1 des cavités de premier type. Un intérêt de ces cavités de second type 52 est de faciliter le démoulage de l'élément moulant.

La figure 7 montre un élément moulant 7 destiné à équiper un moule pour mouler un évidement 5 tel que montré avec la figure 6. Cet élément moulant 7 d'axe de symétrie XX' comprend une partie interne 7' destinée à être fixée dans un moule de bande, cette partie étant prolongée au delà de la limite L par une partie externe 7" destinée à faire saillie sur le moule pour mouler un évidement selon l'invention. Cet élément 7 comprend sur sa partie externe 7" une alternance de parties 71 pour mouler des cavités d'un premier type et de parties 72 pour mouler des cavités d'un deuxième type. Dans le cas montré toutes les parties 71 sont sensiblement identiques entre elles et toutes les parties 72 sont aussi identiques entre elles. Dans cet exemple montré avec la figure 7, chaque partie 71 d'un premier type comprend une partie cylindrique 711 de longueur H11 égale à 0.83 mm, prolongée par une partie tronconique 712 de longueur H12 égale à 0.40 mm et se termine par une partie cylindrique 713 de longueur H13 égale à 0.50 mm et ayant un diamètre inférieur au diamètre de la partie cylindrique 711. Chaque partie 72 d'un second type est de forme tronconique (le sommet virtuel du cône étant situé vers la surface de roulement) et de longueur H2 égale à 0.40 mm. Les longueurs des diverses parties sont prises parallèlement à l'axe XX' de l'élément moulant. Bien entendu, la personne du métier pourra adapter les dimensions, géométries de chacune desdites parties pour obtenir les meilleurs effets.

La figure 8 montre une partie d'une surface de roulement 10 d'une bande de roulement selon l'invention pour laquelle sur la surface de roulement les évidements 5 sont agencés pour déboucher sur la surface de roulement de manière à former un réseau de lignes de contact 81, 82, ces lignes de contact étant sensiblement orientées dans des directions perpendiculaires entre elles. Dans le cas présent, la distance minimale, mesurée sur la surface de roulement à l'état neuf de la bande, séparant deux évidements est nulle. L'avantage d'une telle variante réside dans l'accroissement des pressions de contact le long de ces lignes de contact pour améliorer le drainage des particules présentes sur la chaussée à l'intérieur des évidements.

Dans la variante qui vient d'être montrée avec la figure 8, tous les évidements ont une même géométrie et débouchent sur la surface de roulement avec un contour identique et cela quel que soit le niveau d'usure de la bande. Mais il est tout à fait possible de prévoir des formes (ou un nombre **N** de cavités) différentes pour certains évidements.

Une forme comprise dans l'état de la technique - (montrée à la figure 9) consiste à faire déboucher sur la surface de roulement à l'état neuf à la fois des évidements tels que montrés à la figure 2 (la première cavité ayant une profondeur **H1**) et d'autres avec une forme correspondant aux mêmes évidements mais ayant une première cavité de profondeur égale à la moitié de la profondeur **H1.** Cette figure 9 montre effectivement une coupe d'une bande de roulement comportant une pluralité d'évidements 5, 5'. Les évidements 5 correspondent aux évidements de la figure 2 tandis que les évidements 5' sont sensiblement de même géométrie mais déphasés par rapport aux évidements 5. Ainsi après une usure partielle atteignant le niveau symbolisé par la ligne pointillée W, alors que les évidements 5 deviennent moins efficaces, les évidements 5' débouchent sur la surface de roulement par un contour de plus grande dimension pour maintenir une efficacité appropriée. Ainsi et en moyenne, l'état de la surface de roulement est sensiblement le même quel que soit le niveau d'usure.

Cette dernière variante est particulièrement intéressante avec des évidements comportant des cavités de deuxième type comme ceux présentés avec la figure 6.

## Revendications

1. - Bande de roulement (1) pour pneu, cette bande étant pourvue d'une pluralité de rainures (21, 22) délimitant des éléments de relief (4), ces rainures ayant une profondeur **H**, cette bande de roulement ayant une surface de roulement (10) prévue pour venir en contact avec la chaussée pendant le roulage, cette surface de roulement comprenant sur une pluralité de ses éléments de relief (4) une pluralité d'évidements (5) de profondeur totale **H***, chaque évidement (5) comprenant au moins deux cavités (51) d'un premier type de cavités, chacune de ces cavités (51) d'un premier type étant délimitée par une paroi principale et ayant une profondeur **Hi**, la paroi principale de chaque cavité de premier type est telle que son intersection avec une surface virtuelle parallèle à la surface de roulement à l'état neuf et passant par les points de ladite paroi les plus à l'extérieur de la bande forme un contour extérieur fermé et de longueur **Ce**, la paroi principale de chaque cavité de premier type est telle que son intersection avec une surface virtuelle parallèle à la surface de roulement à l'état neuf et passant par les points de la paroi principale les plus à l'intérieur de la bande forme un contour intérieur fermé et de longueur de longueur **Ci**, les cavités d'un premier type sont disposées de façon à se succéder dans une direction orientée de la surface de roulement vers l'intérieur de la bande de roulement, c'est-à-dire de façon à ce que le contour externe d'une cavité d'un premier type d'un évidement soit localisé, dans la direction de l'épaisseur de la bande, à une distance de la surface de roulement à l'état neuf qui est supérieure ou égale à la distance séparant le contour interne de la cavité précédente par rapport à la même surface de roulement, et en ce que la longueur **Ce** du contour extérieur d'une cavité est supérieure à la longueur **Ci** du contour intérieur de la même cavité, cette bande de roulement comprenant en outre une cavité d'un second type intercalée entre deux cavités d'un premier type, cette cavité de second type étant délimitée par une paroi dont l'intersection, avec une surface parallèle à la surface de roulement à l'état neuf et passant par les points les plus à l'extérieur de ladite paroi, forme un contour fermé de longueur égale à la longueur **Ci** du contour intérieur de la cavité de premier type à laquelle cette cavité de second type est reliée, et en ce que cette cavité de second type est connectée à une cavité de premier type de rang **i**+1 par un contour de longueur égale à la longueur **Ce** du contour extérieur de ladite cavité de rang **i+1,** cette bande de roulement étant **caractérisée en ce que** les profondeurs des cavités de second type sont inférieures aux profondeurs des cavités de premier type.

2. - Bande de roulement selon la revendication 1, **caractérisée en ce que** le nombre N de cavités d'un premier type de chaque évidement est un nombre entier allant de 2 à 8.

3. - Bande de roulement selon la revendication 1 ou la revendication 2 **caractérisée en ce que** la longueur Ci du contour intérieur fermé d'au moins la cavité la plus à l'intérieur de la bande (c'est-à-dire la cavité de rang égal à N) est égale à zéro ou substantiellement proche de zéro.

4. - Bande de roulement selon la revendication 3 ou la revendication 4 **caractérisée en ce que** chaque cavité d'un premier type est de forme conique, le sommet du cône se trouvant vers l'intérieur de la bande.

5. - Bande de roulement selon la revendication 4 **caractérisée en ce que** l'angle de la génératrice du cône est compris entre 2 degrés et 30 degrés.

6. - Bande de roulement selon l'une des revendications 1 à 5 **caractérisée en ce que** les longueurs des contours extérieurs des parois des cavités d'un premier type sont toutes égales entre elles.

7. - Bande de roulement selon la revendication 1 **caractérisée en ce que** chaque cavité d'un premier type comprend une partie de cavité de section constante et une partie de section variable et décroissante, la partie de section constante étant placée à l'intérieur dans la bande par rapport à la partie de section variable.

8. - Bande de roulement selon l'une des revendications 1 à 7 **caractérisée en ce que** la distance minimale, sur la surface de roulement à l'état neuf de la bande, séparant deux évidements est inférieure ou au plus égale à 0,4 millimètre.

9. - Bande de roulement selon l'une des revendications 1 à 7 **caractérisée en ce que** les contours extérieurs des cavités de tous les évidements débouchant sur la surface de roulement sont de géométrie appropriée pour être adjacents les uns aux autres afin de créer des lignes de contact pour accroître les pressions de contact le long de ces lignes.

10. - Bande de roulement selon l'une des revendications 1 à 7 **caractérisée en ce que** les contours intérieurs et extérieurs des cavités d'un premier type sont de forme circulaire.

11. - Bande de roulement selon la revendication 10 **caractérisée en ce que** le diamètre des cavités du premier type est au moins égal à 0,8 millimètre et au plus égal à 1,6 millimètre.

12. - Bande de roulement selon l'une des revendications 1 à 11 **caractérisée en ce que** le volume total des cavités des évidements de premier type et du second type par unité de surface sur la surface de roulement est au moins égal à 0,25 millimètres cubes (mm³) et au plus égal à 20 millimètres cubes (mm³).

## Patentansprüche

1. Laufstreifen (1) für einen Luftreifen, wobei dieser Streifen mit einer Vielzahl von Rillen (21, 22) versehen ist, die Reliefelemente (4) begrenzen, wobei diese Rillen eine Tiefe H haben, wobei dieser Laufstreifen eine Lauffläche (10) hat, die vorgesehen ist, um während des Rollens mit der Straße in Kontakt zu kommen, wobei diese Lauffläche auf einer Vielzahl ihrer Reliefelemente (4) eine Vielzahl von Aussparungen (5) einer Gesamttiefe H* enthält, wobei jede Aussparung (5) mindestens zwei Hohlräume (51) eines ersten Typs von Hohlräumen enthält, wobei jeder dieser Hohlräume (51) eines ersten Typs von einer Hauptwand begrenzt wird und eine Tiefe Hi hat, wobei die Hauptwand jedes Hohlraums ersten Typs so ist, dass ihre Schnittlinie mit einer virtuellen Fläche parallel zur Lauffläche im Neuzustand und durch die am weitesten außerhalb des Streifens liegenden Punkte der Wand verlaufend einen geschlossenen Außenumriss einer Länge Ce formt, wobei die Hauptwand jedes Hohlraums ersten Typs so ist, dass ihre Schnittlinie mit einer virtuellen Fläche parallel zur Lauffläche im Neuzustand und durch die am weitesten innerhalb des Streifens liegenden Punkte der Hauptwand verlaufend einen geschlossenen Innenumriss einer Länge Ci formt, wobei die Hohlräume eines ersten Typs so angeordnet sind, das sie in einer von der Lauffläche zum Inneren des Laufstreifens ausgerichteten Richtung aufeinander folgen, d.h. derart, dass der Außenumriss eines Hohlraums eines ersten Typs einer Aussparung sich in Richtung der Dicke des Streifens in einem Abstand zur Lauffläche im Neuzustand befindet, der größer als der oder gleich dem Abstand ist, der den Innenumriss des vorhergehenden Hohlraums von der gleichen Lauffläche trennt, und dass die Länge Ce des Außenumrisses eines Hohlraums größer als die Länge Ci des Innenumrisses des gleichen Hohlraums ist, wobei dieser Laufstreifen außerdem einen Hohlraum eines zweiten Typs enthält, der zwischen zwei Hohlräume eines ersten Typs eingefügt ist, wobei dieser Hohlraum zweiten Typs von einer Wand begrenzt wird, deren Schnittlinie mit einer virtuellen Fläche parallel zur Lauffläche im Neuzustand und durch die am weitesten außen liegenden Punkte der Wand verlaufend einen geschlossenen Außenumriss einer Länge gleich der Länge Ci des Innenumrisses des Hohlraums ersten Typs formt, mit dem dieser Hohlraum zweiten Typs verbunden ist, und dass dieser Hohlraum zweiten Typs mit einem Hohlraum ersten Typs des Rangs i+1 durch einen Umriss einer Länge gleich der Länge Ce des Außenumrisses des Hohlraums des Rangs i+1 verbunden ist, wobei dieser Laufstreifen **dadurch gekennzeichnet ist, dass** die Tiefen der Hohlräume zweiten Typs geringer als die Tiefen der Hohlräume ersten Typs sind.

2. Laufstreifen nach Anspruch 1, **dadurch gekennzeichnet, dass** die Anzahl N von Hohlräumen eines ersten Typs jeder Aussparung eine ganze Zahl von 2 bis 8 ist.

3. Laufstreifen nach Anspruch 1 oder Anspruch 2, **dadurch gekennzeichnet, dass** die Länge Ci des geschlossenen Innenumrisses mindestens des Hohlraums, der am weitesten innerhalb des Streifens liegt (d.h. der Hohlraum des Rangs N), gleich Null oder im Wesentlichen nahe Null ist.

4. Laufstreifen nach Anspruch 2 oder Anspruch 3, **dadurch gekennzeichnet, dass** jeder Hohlraum eines ersten Typs eine Kegelform hat, wobei der Scheitel des Kegels sich zur Innenseite des Streifens befindet.

5. Laufstreifen nach Anspruch 4, **dadurch gekennzeichnet, dass** der Winkel der Mantellinie des Kegels zwischen 2 Grad und 30 Grad liegt.

6. Laufstreifen nach einem der Ansprüche 1 bis 5, **dadurch gekennzeichnet, dass** die Längen der Außenumrisse der Wände der Hohlräume eines ersten Typs untereinander alle gleich sind.

7. Laufstreifen nach Anspruch 1, **dadurch gekennzeichnet, dass** jeder Hohlraum eines ersten Typs einen Hohlraumteil mit konstantem Querschnitt und einen Teil mit variablem und abnehmendem Querschnitt enthält, wobei der Teil mit konstantem Querschnitt bezüglich des Teils mit variablem Querschnitt im Inneren des Streifens angeordnet ist.

8. Laufstreifen nach einem der Ansprüche 1 bis 7, **dadurch gekennzeichnet, dass** der Mindestabstand, auf der Lauffläche im Neuzustand des Streifens, der zwei Aussparungen trennt, geringer als oder höchstens gleich 0,4 Millimeter ist.

9. Laufstreifen nach einem der Ansprüche 1 bis 7, **dadurch gekennzeichnet, dass** die Außenumrisse der Hohlräume aller Aussparungen, die an der Lauffläche münden, eine geeignete Geometrie haben, um einander benachbart zu sein, um Kontaktlinien zu erzeugen, um die Kontaktdrücke entlang dieser Linien zu erhöhen.

10. Laufstreifen nach einem der Ansprüche 1 bis 7, **dadurch gekennzeichnet, dass** die Innen- und Außenumrisse der Hohlräume eines ersten Typs kreisförmig sind.

11. Laufstreifen nach Anspruch 10, **dadurch gekennzeichnet, dass** der Durchmesser der Hohlräume des ersten Typs mindestens gleich 0,8 Millimeter und höchstens gleich 1,6 Millimeter ist.

12. Laufstreifen nach einem der Ansprüche 1 bis 11, **dadurch gekennzeichnet, dass** das Gesamtvolumen der Hohlräume der Aussparungen des ersten Typs und des zweiten Typs pro Flächeneinheit auf der Lauffläche mindestens gleich 0,25 Kubikmillimeter (mm³) und höchstens gleich 20 Kubikmillimeter (mm³) ist.

## Claims

1. Tread strip (1) for a tyre, this tread strip being provided with a plurality of grooves (21, 22) delimiting elements in relief (4), these grooves having a depth H, this tread strip having a tread surface (10) designed to come into contact with the road surface during running, the tread surface comprising, on a plurality of its elements in relief (4), a plurality of recesses (5) of total depth H*, each recess (5) comprising at least two cavities (51) of a first type of cavities, each of these cavities (51) of a first type being delimited by a main wall and having a depth Hi, the main wall of each cavity of the first type is such that its intersection with a virtual surface parallel to the running surface in the new condition and passing through the points of the said wall that are furthest towards the outside of the tread forms an exterior contour that is closed and of length Ce, the main wall of each cavity of the first type is such that its intersection with a virtual surface parallel to the running surface in the new condition and passing through the points of the main wall furthest towards the inside of the tread forms an interior contour which is closed and of length of length Ci, the cavities of a first type are arranged in such a way as to succeed one another in a direction oriented from the tread surface towards the inside of the tread strip, that is to say so that the external contour of a cavity of a first type of recess is located, in the direction of the thickness of the tread, at a distance from the tread surface in the new condition which is greater than or equal to the distance separating the internal contour of the preceding cavity from the same tread surface, and in that the length Ce of the exterior contour of a cavity is less than the length Ci of the interior contour of the same cavity, this tread comprising further a cavity of a second type inserted between two cavities of a first type, this cavity of the second type being delimited by a wall of which the intersection with a surface parallel to the tread surface in the new condition and passing through the outermost points of the said wall forms a closed contour of length equal to the length Ci of the interior contour of the cavity of the first type to which this cavity of the second type is connected, and in that this cavity of the second type is connected to a first-type cavity of rank i+1 by a contour of a length equal to the length Ce of the exterior contour of the said cavity of rank i+1, this tread being **characterised in that** the depths of the cavities of the second type are less than the depths of the cavities of the first type.

2. Tread strip according to Claim 1, **characterized in that** the number N of cavities of a first type of each recess is an integer ranging from 2 to 8.

3. Tread strip according to Claim 1 or Claim 2, **characterized in that** the length Ci of the closed interior contour of at least the cavity furthest towards the inside of the tread (that is to say the cavity of rank N) is equal to zero or substantially close to zero.

4. Tread strip according to Claim 3, **characterized in that** each cavity of a first type is of conical shape, the vertex of the cone being situated towards the inside of the tread.

5. Tread strip according to Claim 4, **characterized in that** the angle of the generatrix of the cone is comprised between 2 degrees and 30 degrees.

6. Tread strip according to one of Claims 1 to 5, **characterized in that** the lengths of the exterior contours of the walls of the cavities of a first type are all equal to one another.

7. Tread strip according to Claim 1, **characterized in that** each cavity of a first type comprises a cavity part of constant section and a part of a variable and decreasing section, the part of constant section being positioned on the inside of the tread in relation to the part of variable section.

8. Tread strip according to one of Claims 1 to 7, **characterized in that** the minimal distance, on the tread surface when the tread is in the new condition, separating two cavities, is less than or at most equal to 0.4 millimetres.

9. Tread strip according to one of Claims 1 to 7, **characterized in that** the exterior contours of the cavities of all the recesses opening onto the tread surface are of a geometry suited to being adjacent to one another so as to create lines of contact in order to increase the contact pressures along these lines.

10. Tread strip according to one of Claims 1 to 7, **characterized in that** the interior and exterior contours of the cavities of a first type are of circular shape.

11. Tread strip according to Claim 10, **characterized in that** the diameter of the cavities of the first type is at least equal to 0.8 millimetres and at most equal to 1.6 millimetres.

12. Tread strip according to Claims 1 to 11, **characterized in that** the total volume of the cavities of the recesses of the first type and of the second type per unit area on the tread surface is at least equal to 0.25 cubic millimetres (mm³) and at most equal to 20 cubic millimetres (mm³).
